# EUROPÄISCHE PATENTSCHRIFT

(11) **EP 1 559 241 B1**
(45) Veröffentlichungstag und Bekanntmachung des Hinweises auf die Patenterteilung: **03.07.2019**
(21) Anmeldenummer: 03750347.1
(22) Anmeldetag: 12.09.2003
(51) Int. Cl.: H04L 12/28, H04L 12/46, H04L 29/12

(54) **VERFAHREN UND VORRICHTUNG ZUM AUSTAUSCH VON DATEN MITTELS EINER TUNNELVERBINDUNG**
METHOD AND DEVICE FOR EXCHANGING DATA BY MEANS OF A TUNNEL CONNECTION
PROCÉDÉ ET DISPOSITIF POUR ÉCHANGER DES DONNÉES PAR UNE LIAISON TUNNEL

(30) Priorität: 28.10.2002 DE 10250201
(43) Veröffentlichungstag der Anmeldung: 03.08.2005
(73) Patentinhaber: Siemens Aktiengesellschaft, 80333 München (DE)
(72) Erfinder: LE, Thuy-Phuong, 58239 Schwerte (DE); LINDEMANN, Werner, 45473 Mülheim a.d. Ruhr (DE); SCHÖNFELD, Norbert, 44145 Dortmund (DE)
(86) Internationale Anmeldenummer: PCT/DE2003/003029
(87) Internationale Veröffentlichungsnummer: WO 2004/040849

(56) Entgegenhaltungen:
- WO-A-01/71977
- HAMZEH K ET AL: "Point-to-Point Tunneling Protocol--PPTP" IETF DRAFT, Juni 1996 (1996-06), XP002148266 Gefunden im Internet: <URL:ftp://ftp.uminho.pt/Docs/internet-dra fts/draft-ietf-pppext-pptp-00.txt> [gefunden am 2000-09-13]

## Beschreibung

Die Erfindung betrifft ein Verfahren gemäß des Oberbegriffs des Patentanspruchs 1 und eine Vorrichtung gemäß des Oberbegriffs des Patentanspruchs 7.

Moderne Netzwerke zum Austausch von Daten arbeiten häufig paketvermittelt, d. h. die zu übertragenden Informationen zu Paketen werden gebündelt, mit der Netzwerkadresse des Empfängers versehen und dann anhand dieser Adresse im Netzwerk zum Empfänger transportiert. Der Aufbau eines solchen Datenpakets und die Art der Adressierung ist dabei in einem für alle Instanzen des Netzwerks verbindlichen Kommunikationsprotokoll festgelegt. Ein solches Kommunikationsprotokoll ist beispielsweise das Internetprotokoll (IP-Protokoll), welches auch im weltweit größten Datennetz, dem Internet, verwendet wird. Man bezeichnet das Internetprotokoll auch als ein verbindungsloses Kommunikationsprotokoll, weil jedes an einem solchen Kommunikationsnetz angeschlossene Netzelement, beispielsweise ein PC, ohne vorherigen Aufbau einer direkten Kommunikationsverbindung Datenpakete an andere Netzelemente versenden und von diesen empfangen kann. Voraussetzung für einen erfolgreichen Datenaustausch ist dabei zum einen, dass jedes Netzelement mit einer Adresse, also der Internet-Adresse (IP-Adresse), versehen ist, und zum anderen, dass diese IP-Adresse im betrachteten Kommunikationsnetz eindeutig, also nicht mehrfach vergeben ist.

Neben dem Internet, welches auch als öffentliches Kommunikationsnetz betrachtet werden kann, existieren weitere, häufig lokal begrenzte Netzwerke unterschiedlicher Größenordnung. Solche - meist privaten - Netze werden auch als LANs (Local Area Networks) bezeichnet. Das können beispielsweise Kleinstnetzwerke von Privatkunden sein, die aus zwei oder drei Netzelementen bestehen, aber auch Firmennetzwerke mit mehreren tausend Netzelementen. Den Netzelementen der lokalen Netzwerke sind dabei genauso wie den Netzelementen des Internets eindeutige Adressen zugewiesen, wobei jede dieser Adressen zwar im lokalen Netzwerk eindeutig ist, aber nicht eindeutig bezogen auf das öffentliche Kommunikationsnetz, also dem Internet.

Lokale Netzwerke werden häufig zumindest temporär mit dem Internet verbunden. Das geschieht zum Beispiel zum Zugriff auf Websites des Internets, zum Senden und Empfangen von EMails, oder aber auch zum Zwecke der Echtzeit-Kommunikation in Form von Voice-Over-IP-Telefonaten oder Videokonferenzen. Um ein lokales Netzwerk mit dem Internet zu verbinden, werden in der Regel die Dienste eines Internet-Dienste-Anbieters, auch Internet-Service-Provider (ISP) genannt, in Anspruch genommen. Dazu wird zumindest temporär eine Datenverbindung zwischen dem lokalen Netzwerk und dem Netzknoten des Dienste-Anbieters aufgebaut. Während also das innerhalb eines paketvermittelnden Netzwerks benutzte Kommunikationsprotokoll ein verbindungsloses ist, kann die Verbindung zwischen einem lokalen Netzwerk und einem Dienste-Anbieter verbindungsorientiert sein, was zum einen in der Notwendigkeit der Verbindungstarifierung (Vergebührung) begründet ist, und zum anderen eine bessere Kontrolle der vom und zum Dienste-Anbieter übertragenen Daten ermöglicht.

Für die Verbindung zwischen dem lokalen Netzwerk und dem Internet-Dienste-Anbieter sind unterschiedliche technische Zugangsvarianten und Kommunikationsprotokolle bekannt, die je nach den technischen und örtlichen Gegebenheiten ausgewählt werden. Neben dem Zugang über ein Modem und eine analoge Telefonleitung, eine digitale ISDN-Verbindung oder direkt über eine Ethernet-Datenleitung ist heutzutage die Nutzung asynchroner digitaler Datenleitungen (ADSL, DSL) weit verbreitet. Dabei wird dem Betreiber des lokalen Netzwerks ein Modem zur Verfügung gestellt, welches zum lokalen Netzwerk hin einen Netzwerkanschluss besitzt und für die Verbindung zum Dienste-Anbieter eine Datenleitung benutzt.

Zum Datenaustausch zwischen dem lokalen Netzwerk und dem Modem (DSL-Modem) wird über dieses Modem zunächst eine Tunnelverbindung gemäß dem PPTP-Protokoll (Point to Point Tunneling Protocol) aufgebaut. Über diese Tunnelverbindung bezieht das Netzelement des lokalen Netzwerks, welches mit dem Modem verbunden ist, aus dem Adressbereich des Internets eine global eindeutige Internetadresse. Mit Hilfe dieser Internet-Adresse ist dieses Netzelement aus dem Internet heraus adressierbar und kann anhand eines über die Tunnelverbindung "getunnelten" Datenstromes mit einer Gegenstelle aus dem Internet kommunizieren. Diese Adress-Zuweisung ist so lange gültig, wie die Verbindung dauert, die über die Tunnelverbindung übertragen wird. Es wird also zwischen der Tunnelverbindung als "Transportmedium" und der getunnelten Verbindung als "logischem Datenkanal" unterschieden. Die getunnelte Verbindung, für die die globale Adresse gilt, ist eine sogenannte "PPP-Session" oder "PPP-Verbindung" (PPP = Point-to-Point-Protocol), die innerhalb des Tunnels übertragen wird. Die Tunnelverbindung kann allerdings auch nach Abbau der PPP-Verbindung noch bestehen bleiben und für weitere PPP-Verbindungen genutzt werden. Über eine PPTP-Tunnelverbindung können zur gleichen Zeit auch mehrere getunnelte (PPP-) Verbindungen geführt werden.

Der Grund für die nur "leihweise" Zuweisung einer global eindeutigen Internetadresse ist der sehr beschränkte Vorrat an freien, also noch nicht verwendeten, global eindeutigen Internetadressen .

Während also das Netzelement mit den anderen Netzelementen des lokalen Netzwerks anhand der lokalen IP-Adressen kommuniziert, wird zum Datenaustausch über die Tunnelverbindung und über den Dienste-Anbieter mit dem Internet die temporär - man sagt auch dynamisch - zugewiesene global gültige und global eindeutige Internetadresse benutzt. Für den Tunnel selber werden wiederum lokale Adressen verwendet.

Wenn an dem Modem nur ein einziges Netzelement angeschlossen ist, bekommt dieses für die Dauer der getunnelten PPP-Verbindung eine global eindeutige Internetadresse aus dem Adressraum des Internets zugeteilt und wird somit für die Dauer der getunnelten Verbindung Bestandteil des Internets. Falls über das Modem jedoch mehrere Netzelemente eines lokalen Netzwerks zur gleichen Zeit Daten mit dem Internet austauschen sollen, benötigt jedes dieser Netzelemente die Zuweisung einer eigenen global eindeutigen und somit von den anderen Netzwerkadressen des Internets verschiedene IP-Adresse. Dies ist jedoch nur dann möglich, wenn der Tunnel nicht zwischen einem PC als Netzelement des lokalen Netzwerks und dem Modem aufgebaut wird, sondern wenn die Tunnelverbindung zwischen einer zentralen Netzknoteneinrichtung des lokalen Netzwerks und dem Modem etabliert wird. Eine solche Netzknoteneinrichtung wird in der Literatur häufig auch als Router bezeichnet. Damit wird die für die Dauer der PPP-Verbindung vom Internet-Dienste-Anbieter zur Verfügung gestellte global eindeutige IP-Adresse nur dem Router zugewiesen (genaugenommen wie weiter unten ausgeführt einer Instanz innerhalb des Routers). Der Datenverkehr innerhalb des lokalen Netzwerks zwischen den Netzelementen des Netzwerks und dem Router geschieht somit weiterhin unter Verwendung der nur lokal eindeutigen IP-Adressen, während der Datenverkehr zwischen dem Router und dem Internet-Dienste-Anbieter und somit dem Internet unter Adressierung mit Hilfe der global eindeutigen IP-Adresse durchgeführt wird.

Da Datenpakete, die gemäß dem Internet-Protokoll übertragen werden, sowohl mit der Internet-Adresse des Empfängers als auch mit der IP-Adresse des absendenden Netzelements gekennzeichnet werden müssen, umfasst der Router eine Instanz, die eine entsprechende Adressumwertung beim Datenverkehr zwischen den Netzelementen des lokalen Netzwerks und denen des Internets vornimmt. Ein bekanntes Verfahren für eine solche Umwertung ist das NAT-Verfahren (Network Adress Translation). Dabei gilt, dass Datenpakete, die von einem Netzelement des lokalen Netzwerks zu einem Empfänger im Internet gesendet werden, zunächst vom lokal angeordneten Netzelement zum Router gesendet werden. Als Empfänger-Adresse der Datenpakete wird dabei bereits die global eindeutige Adresse des Empfängers benutzt, während als "Absenderadresse" nur die lokal eindeutige IP-Adresse des Netzelements verwendet werden kann. Das Datenpaket wird von der NAT-Instanz des Routers entgegengenommen, die nun die nur lokal eindeutige "Absenderadresse" durch die beim Aufbau der PPP-Verbindung temporär zugewiesene global eindeutige Internetadresse ersetzt. Das Datenpaket unterscheidet sich nun formal nicht mehr von anderen Datenpaketen, die zwischen Netzelementen des Internets selber ausgetauscht werden, und kann somit von dem Router über die PPP-Verbindung zum Internet-Dienste-Anbieter und somit an jedes beliebige Netzelement des Internets übertragen werden.

Die NAT-Instanz des Routers speichert dabei wichtige Daten über den Umwertevorgang, insbesondere die IP-Port-Nummer der sendenden Anwendung. Wenn nun, beispielsweise als Antwort auf das an ein Netzelement des Internets gesendeten Datenpakets, ein weiteres Datenpaket diesmal vom Internet über die Tunnelverbindung des Modems zum Router verschickt wird, ist dieses Datenpaket bezüglich seiner "Empfänger-Adresse" mit der dem Router zugewiesenen temporär gültigen und global eindeutigen IP-Adresse gekennzeichnet. Ein weiteres Empfängermerkmal des Datenpakets ist die IP-Port-Nummer derjenigen Anwendung, die das Datenpaket letztendlich erhalten soll. Der Router verarbeitet dieses Datenpaket mit Hilfe der NAT-Instanz und ermittelt anhand der zuvor gespeicherten Daten, namentlich anhand der IP-Port-Nummer, die lokale Netzwerk-Adresse des Netzelements mit der richtigen Anwendung. In dem Datenpaket wird nun die global gültige "Empfänger-Adresse" durch die lokale IP-Adresse des Netzelements ausgetauscht und danach das Datenpaket an dieses Netzelement im lokalen Netzwerk weitergeleitet.

Mit dem NAT-Verfahren ist somit die Nutzung einer einzigen PPP-Verbindung zu einem Internet-Dienste-Anbieter von mehreren Netzelementen eines lokalen Netzwerks gleichzeitig möglich, ohne dass für jedes dieser Netzelemente eine eigene global eindeutige Internetadresse von dem Internet-Dienste-Anbieter bezogen werden muss.

Das beschriebene Verfahren stößt dann an seine Grenzen, wenn zum Datenaustausch Anwendungen benutzt werden, die eine global eindeutige IP-Adresse nicht nur zur Adressierung der kompletten Datenpakete benutzen, sondern auch innerhalb der in den Datenpaketen transportierten Nutzdaten auf die global eindeutige Internetadresse Bezug nehmen. Man sagt im Hinblick auf das ISO/OSI-Schichtenmodell, dass die IP-Adressen in "höheren Protokollschichten" genutzt werden.

Zwei bekannte Anwendungen, die auf diese Art und Weise verfahren, sind beispielsweise die Programme "Microsoft Net-Meeting" und "active ftp". Bei diesen und einigen anderen Anwendungen ist es wichtig, dass dem Netzelement, auf dem sie installiert sind und ablaufen, eine global eindeutige Internetadresse zugewiesen ist. Wenn solche Applikationen und Anwendungen in einem lokalen Netzwerk, welches mit Hilfe der beschriebenen NAT-Funktion Daten mit dem Internet austauscht, verwendet werden, muss die NAT-Instanz des Routers nicht nur die Adressierung der gesendeten und empfangenen Datenpakete umwerten, sondern auch den Inhalt der Datenpakete selbst analysieren und in den Fällen, in denen die Datenpakete von einer der beschriebenen Anwendungen stammen, die Adressierungen der höheren Protokollschichten anpassen. Das hat jedoch zum Nachteil, dass die NAT-Instanz zur Analyse des gesamten Datenverkehrs ausgebildet und auch auf die spezifischen Übertragungsprotokolle aller in Frage kommenden Anwendungen eingerichtet sein muss.

Ein weiterer Nachteil ist derjenige, dass bei Datenpaketen, die aus dem Internet bei der NAT-Instanz ankommen und keine Antwort auf eine bereits zuvor von einem Netzelement des lokalen Netzwerks versendeten Datenpakets darstellen, in der NAT-Instanz keine gespeicherten Informationen über den "richtigen" Empfänger vom lokalen Netzwerk vorliegen.

Dieser Nachteil wird teilweise dadurch umgangen, dass für eine Reihe bekannter IP-Port-Nummern für ankommende und nicht anhand gespeicherter Informationen zuzuordnenden Datenpakten ein Ziel-Netzelement vordefiniert wird. Man spricht in diesem Zusammenhang auch von "Exposed Machines". Man macht sich dabei zu nutze, dass eine Reihe von IP-Port-Nummern, man spricht auch von Well-Known-Ports, jeweils einem bestimmten Anwendungstyp zugeordnet sind und somit von der NAT-Instanz an ein (bzw. das) Netzelement mit der entsprechenden Anwendung adressiert werden können. Diese Form des Routings ist allerdings für jede IP-Port-Nummer auf eine einzige Anwendung und damit auf ein einziges Netzelement des lokalen Netzwerks beschränkt.

Die Druckschrift WO 01/71977 A2 Bosco et al. "Home-Networking" zeigt eine Anordnung, in der mehrere Netzelemente ("client device") über eine Netzknoteneinrichtung ("home gateway device") mit einer externen Einrichtung ("Host System") verbunden sind. Die Netzknoteneinrichtung umfasst dabei eine Adressumsetzungseinrichtung (NAT-Instanz), wodurch die lokalen Adressen der Netzelemente in eine globale Adresse der externen Einrichtung umgesetzt wird, und umgekehrt. Für Anwendungen, bei denen einem der Netzelemente eine globale Adresse durch die externe Einrichtung zugewiesen werden soll, baut die Netzknoteneinrichtung nach Anforderung durch die Anwendung eine Tunnelverbindung stellvertretend für das betroffene Netzelement zu der externen Einrichtung auf, wobei der betroffenen Anwendung die netzwerkseitige globale IP-Adresse der Tunnelverbindung zugeordnet wird und wobei die für die Anwendung bestimmten getunnelten Daten der Anwendung von der Netzknoteneinrichtung übermittelt werden

Das Dokument
HAMZEH K ET AL: "Point-to-Point Tunneling Protocol--PPTP", IETF DRAFT, Juni 1996
beschreibt das Tunneln des Point to Point Protocols (PPP) durch ein IP Netz.

In vielen Fällen ist der sicherste und in der Praxis einzig gangbare Weg zur Nutzung bestimmter Anwendungen derjenige, dass das entsprechende Netzelement einer solchen Anwendung direkt, also unter Ausschluss des Routers, mit dem Modem verbunden wird. Dann erfolgt der PPTP-Tunnelaufbau nicht mehr zwischen einer logischen Instanz des Routers und dem Modem, sondern zwischen dem betroffenen Netzelement selbst und dem Modem. Damit wird die PPP-Verbindung direkt zwischen dem Netzelement und dem Internet-Dienste-Anbieter aufgebaut. Dem Vorteil, dass dem Netzelement selbst somit die global eindeutige Internetadresse zugewiesen wird und somit auch die beschriebenen Anwendungen mit den besonderen Anforderungen betrieben werden können, steht der Nachteil gegenüber, dass der Netzwerkanschluss des Netzelements direkt mit dem Modem verbunden werden muss. Das erfordert in der Regel ein manuelles Umstecken der Anschlußstecker. Dabei ist während der Nutzung dieser Verbindung das Netzelement nicht mehr mit den anderen Netzelementen verbunden.

Aufgabe der Erfindung ist es, die Bedienung eines PC mit installierten Anwendungen als Netzelement in einem paketvermittelnden Netzwerk zu vereinfachen.

Die Lösung dieser Aufgabe ergibt sich für das Verfahren aus den Merkmalen des Patentanspruchs 1 und für die Vorrichtung aus den Merkmalen des Patentspruchs 6. Die Lösung sieht vor, dass eines der Netzelemente, wenn es für die Ausführung einer Anwendung eine globale Adresse benötigt, eine Tunnelverbindung aufbaut und deren netzwerkseitigen Endpunkt bildet, wobei diese Tunnelverbindung nur von diesem Netzelement genutzt wird und wobei alle getunnelten Daten durch die Netzknoteneinrichtung geleitet werden. Dadurch sind auch solche Anwendungen nutzbar, die erfordern, dass die global gültige IP-Adresse dem Netzelement selbst zugewiesen ist.

Durch die kennzeichnenden Merkmale der Unteransprüche ist die Erfindung in vorteilhafter Weise weiter ausgestaltet.

Wenn die Netzknoteneinrichtung wechselweise oder gleichzeitig Endpunkt oder datendurchleitende Instanz einer Tunnelverbindung und/oder mehrerer Tunnelverbindungen sein kann, können mehrere Netzelemente das NAT-Verfahren nutzen, während solche Netzelemente, auf denen Anwendungen mit besonderen Anforderungen ablaufen, dennoch Endpunkt einer Tunnelverbindung sein können. Das Umverkabeln der Anordnung kann dabei entfallen.

Mit externen Einrichtungen kann auf bewährte Weise kommuniziert werden, wenn die Tunnelverbindung eine nach dem PPTP-Tunneling-Protocol arbeitenden Verbindung ist, die die Daten einer getunnelten Verbindung unbeeinflusst überträgt.

Wenn die Netzelemente PCs sind und die externe Einrichtung ein über ein DSL-Modem angeschalteter Internet-Dienste-Anbieter ist, haben die Netzelemente die Möglichkeit, mit Teilnehmern des Internets Daten auszutauschen.

Die Anzahl der benötigten global eindeutigen IP-Adressen wird vermindert, indem den Netzelementen lokale, nur in dem paketvermittelnden Netzwerk eindeutige Adressen zugewiesen sind.

Falls die Netzknoteneinrichtung ein Router ist, der eine Instanz zum Aufbau und Betrieb einer PPTP-Tunnelverbindung aufweist, kann der netzwerk-interne Datenverkehr mit dem gleichen Gerät abgewickelt werden, welches auch den Zugang zu externen Einrichtungen ermöglicht.

Ein Ausführungsbeispiel der Erfindung wird im Folgenden anhand der Zeichnungen näher erläutert. Dabei zeigt:
- FIG 1: einen Router als Netzknoteneinrichtung mit einem daran angeschlossenen PC als Netzelement, einen Zugang zum ISDN und einen Zugang zu einem Internet-Dienste-Anbieter als externe Einrichtung,
- FIG 2: die Datenübertragung zwischen einem Netzelement und einem Internet-Dienste-Anbieter bei Nutzung des NAT-Verfahrens,
- FIG 3: eine getunnelte Verbindung, die den Router über ein Modem mit dem Internet-Dienste-Anbieter verbindet, und
- FIG 4: eine getunnelte Verbindung, die unter Beteiligung des Routers zwischen dem Netzelement und dem Internet-Dienste-Anbieter geschaltet ist.

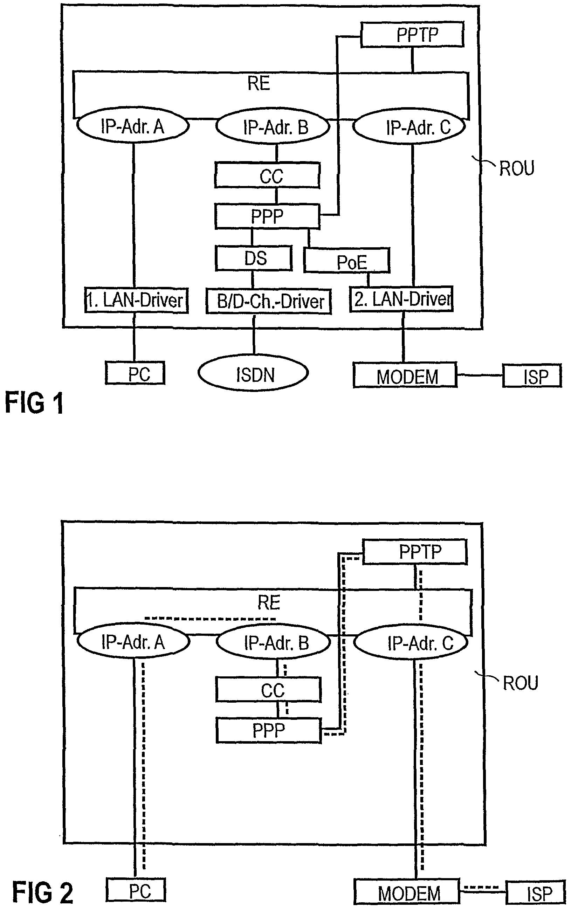

In FIG 1 ist ein Router ROU als Netzknoteneinrichtung dargestellt, an dem die Netzelemente eines lokalen paketvermittelnden Netzwerkes LAN angeschlossen sind. Von diesen Netzelementen wird exemplarisch das als Computer ausgebildete Netzelement PC betrachtet.

Der Router ROU besitzt einen Zugang zum öffentlichen Kommunikationsnetz ISDN und ist mit einem Modem MODEM ("DSL-Modem") verbunden, welches über eine DSL-Verbindung mit dem Netzknoten eines Internet-Dienste-Anbieters ISP, kurz Internet-Provider, verbunden ist.

Der Router ROU ist intern mit einer Routing-Einheit RE versehen, die geräteintern Datenpakete anhand von IP-Adressen vermittelt. Interne Vermittlungsziele der Routing-Einheit RE sind dabei mit IP-Adr.A (IP-Adresse A), IP-Adr.B (IP-Adresse B) und IP-Adr.C (IP-Adresse C) gekennzeichnete interne Interfaces. Der Router ROU ist an den Schnittstellen zu den an ihm angeschlossenen Netzelementen und Übertragungsleitungen jeweils mit Leitungstreibern ausgestattet, die die elektrische und logische Anpassung an das entsprechende Leitungsmedium gewährleisten. Diese Leitungstreiber sind in FIG 1 mit 1.LAN-Driver, B/D-Ch.-Driver und 2.LAN-Driver bezeichnet; zur besseren Übersicht sind diese Leitungstreiber in den weiteren Figuren nicht mehr enthalten.

Der Router ROU umfasst für den Zugang zu dem öffentlichen Kommunikationsnetz ISDN eine ISDN-Protokolleinheit DS ("Digital Subscriber Stack") und den bereits erwähnten ISDN-Leitungstreiber B/D-Ch.-Driver. Diese Instanzen und Einrichtungen sind in den folgenden Figuren FIG 2, FIG 3 und FIG 4 nicht weiter eingezeichnet, weil in diesem Ausführungsbeispiel die beschriebene Datenübertragung allein über das DSL-Modem MODEM erfolgt. Gleiches gilt für die "Point-to-Point-over-Ethernet"-Einheit PoE, die in einer im folgenden nicht weiter betrachteten Anschaltungsart den Router mit dem DSL-Modem verbindet.

Das Netzelement PC kann Daten grundsätzlich auf zwei verschiedene Arten mit dem Internet-Dienste-Anbieter ISP austauschen.

FIG 2 zeigt die Datenübertragung zwischen dem Netzelement PC und dem Internet-Dienste-Anbieter ISP bei Nutzung des NAT-Verfahrens. Das NAT-Verfahren ist dabei in der Software des Routers ROU realisiert; man spricht dabei auch von einer "NAT-Instanz". Das Netzelement PC tauscht unter Verwendung lediglich lokal eindeutiger IP-Adressen die Datenpakete mit dem Router ROU aus, wobei die Datenpakete im Router ROU gemäß dem bekannten NAT-Verfahren (Network-Adress-Translation) umgesetzt werden. Der Weg, den die Datenpakete dabei zwischen dem Netzelement PC und dem Internet-Dienste-Anbieter ISP durchlaufen ist in FIG 2 als unterbrochene Strichlinie dargestellt. Um die vom Netzelement PC gesendeten und mit der lokalen IP-Adresse des Netzelements PC als "Absenderadresse" versehenen Datenpakete zum Internet-Dienste-Anbieter ISP durchleiten zu können, muss die NAT-Instanz Zugriff auf eine etablierte PPP-Verbindung zum Internet-Dienste-Anbieter ISP haben.

Der Auf- und Abbau dieser PPP-Verbindung wird durch eine Verbindungssteuerungseinrichtung CC ("Connection-Control") gesteuert. Diese Steuerungseinrichtung CC baut eine solche Verbindung nach Anforderung auf, überwacht danach, ob diese Verbindung weiter genutzt wird, und sorgt in Nutzungspausen dafür, dass die PPP-Verbindung wieder abgebaut wird.

Das mit IP-Adr.A gekennzeichnete Interface ist im Netzelement PC als Standard-Adresse für diejenigen Datenpakete voreingestellt, die zu Adressen im Internet versendet werden sollen. Man sagt auch, dass im Netzelement PC die IP-Adresse des Interfaces IP-Adr.A als "default-Gateway" konfiguriert ist. Das Netzelement PC versendet nun ein erstes Datenpaket an eine IP-Adresse des Internets. Die Routing-Einheit RE leitet dieses Datenpaket (und alle folgenden Datenpakete) zu dem mit IP-Adr.B gekennzeichneten Interface weiter, von wo das Datenpaket zur Verbindungssteuerung CC gelangt.

Zu diesem Zeitpunkt besteht noch keine Verbindung zum Internet-Dienste-Anbieter ISP, so dass die Verbindungssteuerung CC den Aufbau einer solchen Verbindung veranlasst. Dazu startet die Protokolleinheit (Instanz) PPP ("Point-to-Point-Protokoll") einen Punkt-zu-Punkt-Verbindungsaufbau zum Internet-Dienste-Anbieter ISP. In der Protokolleinheit PPP sind das Kennwort und das Passwort für das Zugangskonto des Betreibers des lokalen Netzwerks beim Internet-Dienste-Anbieter ISP gespeichert.

Die Protokolleinheit PPP ist hier so voreingestellt, dass sie den Aufbau einer Tunnelverbindung unter Nutzung des Modems MODEM veranlasst, wenn diese nicht schon aufgebaut ist. Dazu wird eine Tunnel-Protokolleinheit (Instanz) PPTP ("Point-to-Point-Tunneling-Protocol") eingeschaltet, die letztlich die Tunnelverbindung (PPTP-Tunnel) zwischen der Routing-Einheit RE, nämlich am Interface IP-Adr.C, und dem Modem MODEM veranlasst.

Nach Aufbau der getunnelten Verbindung übermittelt der Internet-Dienste-Anbieter ISP dem Router ROU bzw. dessen PPP-Instanz eine global eindeutige und für die Dauer dieser PPP-Verbindung gültige IP-Adresse, die von der Routing-Einheit RE mit dem als IP-Adr.B gekennzeichneten Interface logisch verknüpft wird. Die NAT-Instanz des Routers ROU benutzt jetzt diese bezogene und global eindeutige IP-Adresse, um sie in den zu übertragenden Datenpaketen gegen die nur lokal eindeutige und gültige IP-Adresse des Netzelements PC auszutauschen und somit mit diesem Netzelement PC und weiteren, hier nicht dargestellten Netzelementen die getunnelte Verbindung zu benutzen.

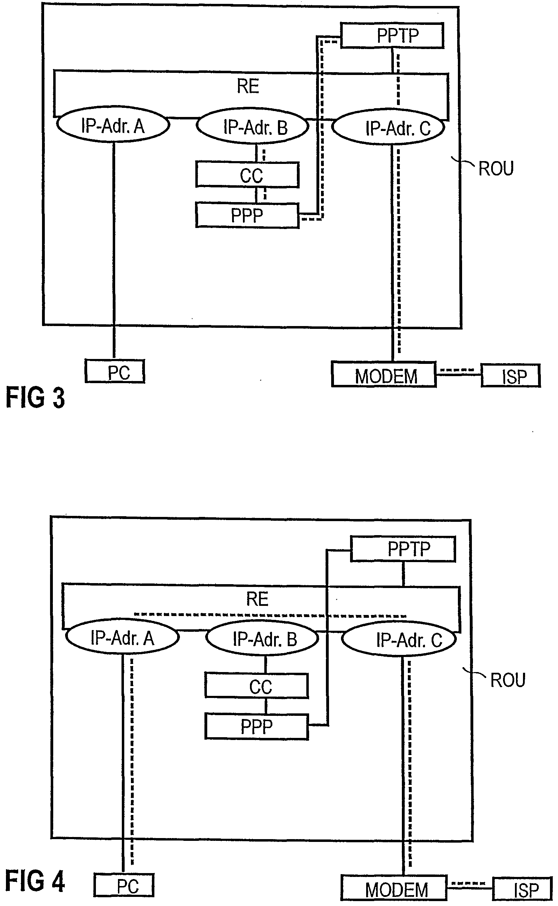

In FIG 3 ist die getunnelte Verbindung, die den Router ROU über das Modem MODEM mit dem Internet-Dienste-Anbieter ISP verbindet, schematisch durch eine unterbrochene Strichlinie visualisiert. Die von der getunnelten Verbindung genutzte Tunnelverbindung beginnt bei der PPTP-Instanz PPTP und endet beim Modem MODEM.

Das erste Datenpaket und alle weiteren, folgenden Datenpakete und Antwort-Datenpakete werden nun unter Nutzung der Tunnelverbindung zwischen dem Netzelement PC und dem Internet-Diensteanbieter ISP übertragen. Dabei werden die Antwort-Datenpakete vom Modem MODEM gekapselt, also mit sog. "Tunneling-Informationen" adressiert, zum Interface IP-Adr.C des Routers ROU gesendet und von dort an die PPTP-Instanz weitergeleitet. Dort werden die "Tunneling-Informationen" entfernt - man spricht auch vom "entpacken" - und die Datenpakete werden über die PPP-Instanz und die Interfaces IP-Adr.B, IP-Adr.A dem Netzelement PC zugeleitet.

Die Verbindungssteuerungseinrichtung CC veranlasst den Abbau der PPP-Verbindung, wenn diese eine vorgegebene Zeit lang nicht mehr verwendet wurde. Der PPTP-Tunnel kann dann entweder ebenfalls abgebaut oder bis zur nächsten Nutzung durch eine neue PPP-Verbindung offen gehalten werden. Wenn gleichzeitig noch eine weitere PPP-Verbindung besteht, darf der PPTP-Tunnel natürlich nicht abgebaut werden.

Neben der NAT-Instanz ist im Router ROU eine (nicht dargestellte) Filtereinrichtung aktiv, die oft auch als "Firewall" bezeichnet wird und die den unberechtigten Zugriff auf Netzelemente verhindert.

Der oben geschilderte Zugang über das NAT-Verfahren kann nicht in jedem Anwendungsfall verwendet werden.

Im Folgenden wird dazu der Fall betrachtet, in dem auf dem Netzelement PC eine Anwendung gestartet wird, die nur funktioniert, wenn dem Netzelement PC selbst eine global eindeutige IP-Adresse zugeordnet ist. Hierzu wird nun zwischen dem Netzelement PC selbst und dem Internet-Dienste-Anbieter ISP eine PPP-Verbindung aufgebaut, was in FIG 4 schematisch dargestellt ist. Es gibt üblicherweise nur einen PPTP-Tunnel für ein Modem MODEM, aber mehrere parallele PPP-Verbindungen, die darüber geleitet werden. Prinzipiell ist mit der gezeigten Anordnung ein Parallelbetrieb des bereits beschriebenen Verfahrens unter Einbeziehung des NAT-Protokolls und einer direkten Tunnelverbindung zwischen einem der Netzelemente PC und dem Modem MODEM möglich. Dafür müssen seitens des Internet-Dienste-Anbieters ISP und des Modems MODEM die notwendigen technischen Voraussetzungen gegeben sein; insbesondere muss eine weitere global eindeutige IP-Adresse zur Verfügung gestellt werden, die nicht für den PPTP-Tunnel, sondern für die PPP-Verbindung benötigt wird. Anderenfalls muss, wie im vorliegenden Fall, vor der Etablierung einer direkten Tunnelverbindung zwischen einem Netzelement PC und dem Modem MODEM eine bereits bestehende Tunnelverbindung zwischen dem Router ROU und dem Modem MODEM abgebaut werden.

Um eine PPP-Verbindung zwischen dem Netzelement PC und dem Internet-Dienste-Anbieter ISP aufbauen zu können, müssen die aus dem Router ROU bekannten Protokolleinheiten PPP und PPTP bereits im Netzelement PC verfügbar sein, was durch Aufspielen einer entsprechenden Software geschieht.

Zum Betrieb einer Tunnelverbindung wird den beiden Instanzen an den Tunnel-Enden jeweils eine IP-Adresse fest zugeordnet. Diese beiden IP-Adressen müssen nicht (und sind es meist auch nicht) global eindeutig sein, sondern sie sind nur bezogen auf das lokale Netzwerk eindeutig. Während also die erste dieser beiden IP-Adressen dem modemseitigen Ende der Tunnelverbindung zugeordnet ist, wird die zweite IP-Adresse dieses Adressen-Paares dem netzwerkseitigen Ende der Tunnelverbindung zugeordnet. Im Falle des oben beschriebenen Zugangs über das NAT-Verfahren ist das netzwerkseitige Tunnel-Ende am Interface IP-Adr.C angeordnet und stellt somit ein Routing-Ziel der internen Routing-Einheit RE dar. Im nun betrachteten Fall führt die Tunnelverbindung jedoch vom Netzelement PC über den Router ROU zum MODEM, so dass zur Etablierung dieser Tunnelverbindung dem Netzwerkadapter (Netzwerkkarte) des Netzelements PC die zweite IP-Adresse des Adressen-Paares zugewiesen wird, die zum lokalen Adressbereich gehört. Das geschieht durch einen einmaligen Administrations-Vorgang; die IP-Adressen des Adressen-Paares sind danach fest vergeben. Zum Aufbau der getunnelten Verbindung adressiert die PPP-Protokolleinheit des Netzelements PC die PPTP-Protokolleinheit des gleichen Netzelements PC, die wiederum zum Verbindungsaufbau ein erstes Start-Datenpaket, adressiert mit der ersten IP-Adresse des Adressen-Paares, zur Netzknoteneinheit ROU sendet.

Die interne Routing-Einheit RE ist so voreingestellt, dass dieses Datenpaket (und alle derart adressierten nachfolgenden Datenpakete) an den Leitungsanschluß weitergeleitet wird, an dem das Modem MODEM angeschlossen ist. Somit gelangt das Start-Datenpaket zum Modem MODEM, wo dieses Start-Datenpaket beantwortet wird. Das Antwort-Datenpaket ist mit der zweiten IP-Adresse des Adressen-Paares adressiert und gelangt vom Modem MODEM zur internen Routing-Einheit RE. Die Routing-Einheit RE ist derart voreingestellt, dass alle Datenpakete, und somit auch das Antwort-Datenpaket, die über das Modem MODEM an den mit IP-Adr.C gekennzeichneten Anschluß der Routing-Einheit RE gelangen, zum internen Interface IP-Adr.A geleitet werden. Solche Verfahren werden auch als "Host-Routing" und "Proxy ARP" bezeichnet. Die NAT-Instanz des Routers ROU wird dabei nicht durchlaufen. Schließlich wird das Antwort-Datenpaket zum Interface IP-Adr.A und somit zum Netzelement PC mit der zweiten IP-Adresse der Tunnelverbindung transportiert.

Dort endet die Tunnelverbindung, so dass die Kapselung, die im wesentlichen aus der Kennzeichnung mit dem Adressen-Paar besteht, durch die hier angeordnete PPTP-Protokolleinheit entfernt wird. Das resultierende Datenpaket und weitere Datenpakete dienen zunächst dem endgültigen Aufbau der Punkt-zu-Punkt-Verbindung durch die PPP-Protokolleinheit. Während dieses Punkt-zu-Punkt-Verbindungsaufbaus wird dem Netzelement PC eine für die Dauer dieser Sitzung gültige und global eindeutige IP-Adresse zugewiesen. Die damit etablierte Tunnelverbindung wird bei Netzelementen, die das bekannte Betriebssystem "MS Windows" verwenden, häufig als "DFÜ-Verbindung" bezeichnet.

Das Netzelement PC ist so programmiert oder vom Anwender gesteuert, dass abhängig von der auf dem Netzelement PC aktiven Anwendung entweder eine "indirekte" Tunnelverbindung (der Router baut die Tunnelverbindung auf und das NAT-Verfahren wird verwendet) oder aber eine "direkte" Tunnelverbindung (das Netzelement selbst baut die Tunnelverbindung auf) etabliert wird, wobei je nach den technischen Gegebenheiten des Modems und des Internet-Diensteanbieters ISP beide Betriebsarten wechselweise oder gleichzeitig durchgeführt werden können.

## Patentansprüche

1. Verfahren zum Austausch von Daten zwischen einer externen Einrichtung (ISP) und auf Netzelementen (PC) eines paketvermittelnden Netzwerks installierten Anwendungen mittels zumindest einer Tunnelverbindung,
- bei dem jedes Netzelement (PC) an einer Netzknoteneinrichtung (ROU) angeschlossen ist,
- bei dem dem netzwerkseitigen Endpunkt der getunnelten Verbindung eine globale Adresse eindeutig zugeordnet wird,
wobei bei mehreren die Tunnelverbindung gemeinsam nutzenden Netzelementen (PC) die Netzknoteneinrichtung (ROU) den netzwerkseitigen Endpunkt der Tunnelverbindung bildet, und dass eines der Netzelemente (PC), wenn es für die Ausführung einer Anwendung eine globale Adresse benötigt, eine Tunnelverbindung aufbaut und deren netzwerkseitigen Endpunkt bildet, wobei diese Tunnelverbindung nur von diesem Netzelement (PC) genutzt wird und wobei alle Daten durch die Netzknoteneinrichtung (ROU) geleitet werden, **dadurch gekennzeichnet, dass** die Netzknoteneinrichtung (ROU) wechselweise Endpunkt einer Tunnelverbindung sein kann, oder datendurchleitende Instanz mit dem Netzelement (PC) als netzwerkseitigem Endpunkt.

2. Verfahren nach einem der vorhergehenden Ansprüchen,
**dadurch gekennzeichnet,**
**dass** die Tunnelverbindung eine nach dem PPTP-Tunneling-Protocol arbeitenden Verbindung ist, die die Daten einer getunnelten Verbindung unbeeinflusst überträgt.

3. Verfahren nach einem der vorhergehenden Ansprüchen,
**dadurch gekennzeichnet,**
**dass** die Netzelemente (PC) PCs sind und die externe Einrichtung (ISP) ein über ein DSL-Modem (MODEM) angeschalteter Internet-Dienste-Anbieter ist.

4. Verfahren nach einem der vorhergehenden Ansprüchen,
**dadurch gekennzeichnet,**
**dass** den Netzelementen (PC) lokale, nur in dem paketvermittelnden Netzwerk (LAN) eindeutige Adressen zugewiesen sind.

5. Verfahren nach einem der vorhergehenden Ansprüchen,
**dadurch gekennzeichnet,**
**dass** die Netzknoteneinrichtung (ROU) ein Router ist, der eine Instanz zum Aufbau und Betrieb einer PPTP-Tunnelverbindung aufweist.

6. Netzknoteneinrichtung (ROU) zum Austausch von Daten mittels zumindest einer Tunnelverbindung zwischen einer externen Einrichtung (ISP) und auf Netzelementen (PC) eines paketvermittelnden Netzwerks installierten Anwendungen,
- bei dem jedes Netzelement (PC) an die Netzknoteneinrichtung (ROU) angeschlossen ist und
- bei dem dem netzwerkseitigen Endpunkt der getunnelten Verbindung eine globale Adresse eindeutig zugeordnet ist,
wobei bei mehreren die Tunnelverbindung gemeinsam nutzenden Netzelementen (PC) die Netzknoteneinrichtung (ROU) den netzwerkseitigen Endpunkt der Tunnelverbindung bildet,
**dadurch gekennzeichnet,**
**dass** durch eines der Netzelemente (PC), wenn es für die Ausführung einer Anwendung eine globale Adresse benötigt, eine Tunnelverbindung aufbaubar ist und es dann deren netzwerkseitigen Endpunkt bildet, wobei diese Tunnelverbindung nur von diesem Netzelement (PC) nutzbar ist und wobei eine Durchleitung aller Daten dieser Tunnelverbindung durch die Netzknoteneinrichtung (ROU) erfolgt.

## Claims

1. Method for interchanging data between an external device (ISP) and applications installed on network elements (PC) of a packet-switching network using at least one tunnel connection,
- in which each network element (PC) is connected to a network node device (ROU),
- in which the network-end terminal point of the tunneled connection is allocated a global address uniquely,
with the network node device (ROU) forming the network-end terminal point of the tunnel connection when there are a plurality of network elements (PC) with joint use of the tunnel connection,
and
in that if one of the network elements (PC) requires a global address for executing an application it sets up a tunnel connection and forms the latter's network-end terminal point, this tunnel connection being used only by this network element (PC), and all data being routed through the network node device (ROU),
**characterized**
**in that** the network node device (ROU) may alternately be a terminal point of a tunnel connection, or a data-routing entity with the network element (PC) as network-end terminal point.

2. Method according to one of the preceding claims,
**characterized**
**in that** the tunnel connection is a connection which operates on the basis of the PPTP tunneling protocol and which transmits the data in a tunneled connection without influence.

3. Method according to one of the preceding claims,
**characterized**
**in that** the network elements (PC) are PCs and the external device (ISP) is an Internet service provider connected by means of a DSL modem (MODEM).

4. Method according to one of the preceding claims,
**characterized**
**in that** the network elements (PC) have associated local addresses which are unique only in the packet-switching network (LAN).

5. Method according to one of the preceding claims,
**characterized**
**in that** the network node device (ROU) is a router which has an entity for setting up and operating a PPTP tunnel connection.

6. Network node device (ROU) for the interchange of data using at least one tunnel connection between an external device (ISP) and applications installed on network elements (PC) of a packet-switching network,
- in which each network element (PC) is connected to the network node device (ROU), and
- in which the network-end terminal point of the tunneled connection has a uniquely allocated global address,
with the network node device (ROU) forming the network-end terminal point of the tunnel connection when there are a plurality of network elements (PC) with joint use of the tunnel connection,
**characterized**
**in that** if one of the network elements (PC) requires a global address for executing an application it can set up a tunnel connection and it then forms the latter's network-end terminal point, this tunnel connection being able to be used only by this network element (PC), and all data of this tunnel connection being routed through the network node device (ROU).

## Revendications

1. Procédé d'échange de données entre un dispositif externe (ISP) et des applications installées sur les éléments de réseau (PC) d'un réseau de commutation de paquets au moyen d'au moins une liaison tunnel,
- dans lequel chaque élément de réseau (PC) est connecté à un dispositif de noeud de réseau (ROU),
- dans lequel une adresse générale est associée de manière univoque au point terminal côté réseau de la liaison en tunnel,
en cas de pluralité d'éléments de réseau (PC) utilisant en commun cette liaison tunnel, le dispositif de noeud de réseau (ROU) formant le point terminal côté réseau de la liaison tunnel, et
un des éléments de réseau (PC), quand il nécessite pour l'exécution d'une application, une adresse générale, constitue une liaison tunnel et en forme le point terminal côté réseau, cette liaison tunnel n'étant utilisée que par cet élément de réseau (PC) et toutes les données étant conduites par le dispositif de noeud de réseau (ROU), **caractérisé en ce que** le dispositif de noeud de réseau (ROU) peut être parfois le point terminal d'une liaison tunnel,
ou une instance de conduite de données avec l'élément de réseau (PC) comme point terminal côté réseau.

2. Procédé selon l'une des revendications précédentes,
**caractérisé en ce que**
la liaison tunnel est une liaison fonctionnant conformément au protocole de Tunneling PPTP, qui transmet de manière non-affectée les données d'une liaison en tunnel.

3. Procédé selon l'une des revendications précédentes,
**caractérisé en ce que**
les éléments de réseau (PC) sont des ordinateurs individuels (PC) et le dispositif externe (ISP) est un fournisseur de service internet branché par un Modem-DSL (MODEM).

4. Procédé selon l'une des revendications précédentes,
**caractérisé en ce que**
aux éléments de réseau (PC) sont affectées seulement des adresses univoques locales dans le réseau de commutation de paquet (LAN).

5. Procédé selon l'une des revendications précédentes,
**caractérisé en ce que**
le dispositif de noeud de réseau (ROU) est un routeur qui présente une instance destinée à la constitution et au fonctionnement d'une liaison tunnel PPTP.

6. Dispositif de noeud de réseau (ROU) destiné à l'échange de données au moyen d'au moins une liaison tunnel entre un dispositif externe (ISP) et des applications installées sur les éléments de réseau (PC) d'un réseau de commutation de paquets,
- dans lequel chaque élément de réseau (PC) est connecté à un dispositif de noeud de réseau (ROU), et
- dans lequel une adresse générale est associée de manière univoque au point terminal côté réseau de la liaison en tunnel,
en cas de pluralité d'éléments de réseau (PC) utilisant en commun cette liaison tunnel, le dispositif de noeud de réseau (ROU) formant le point terminal côté réseau de la liaison tunnel,
**caractérisé en ce que**,
par un des éléments de réseau (PC), quand une adresse générale est nécessaire à l'exécution d'une application, il peut se former une liaison tunnel et il se forme son point terminal côté réseau, cette liaison tunnel ne pouvant être utilisée que par cet élément de réseau (PC) et une conduite de toutes les données de cette liaison tunnel s'effectuant par le dispositif de noeud de réseau (ROU).
